# EUROPEAN PATENT APPLICATION

(11) **EP 4 483 997 A1**
(43) Date of publication of application: **01.01.2025**
(21) Application number: 24179849.5
(22) Date of filing: 04.06.2024
(51) Int. Cl.: B01F 25/441, B01F 25/442, B01F 33/81, F16K 1/42, F16K 17/04

(54) **A COMPRESSION HEAD FOR A HOMOGENIZING APPARATUS**

(71) Applicant: GEA Mechanical Equipment Italia S.p.A., 43123 Parma (IT)
(72) Inventor: FONTANESI, Filippo, 43123 PARMA (IT); TONELLI, Annachiara, 43044 COLLECCHIO (PARMA) (IT)
(74) Representative: Dondi, Silvia

(57) **Abstract**

A compression head (100) for a homogenizing apparatus, the compression head (100) comprising:
- at least two interconnected solid units (101, 102) defining at least one interface (103);
- a valve assembly (1) arranged in a groove (104) which is obtained at the interface (103) and which is delimited by surfaces (105, 106) of the solid units (101, 102), the valve assembly (1) comprising a ball check valve or poppet (2) and a valve seat (3) configured to receive the ball check valve or poppet (2),
wherein the valve seat (3) consists of a hollow body (4) with a rotational symmetry which is fitted in the groove (104), the hollow body (4) being made of a metal or a metal alloy or a ceramic material, and comprising:
- a core (41) having a cylindrical shape;
- a first end portion (42) and a second end portion (43) respectively originating on opposite sides of the core (41), the first end portion (42) being configured to receive the ball check valve or poppet (2).

## Description

The present invention relates to a compression head for a homogenizing apparatus. The compression head may also be used in a high-pressure pump.

The invention proposed here can be used in manufacturing fields where homogenization at high pressure is a step of the production process, such as in chemical, pharmaceutical or cosmetic industry.

In this context, "high pressure" refers to pressures equal or higher than 600 bar. The invention has been developed to solve some criticalities which are mainly met in homogenization at high pressure, but it may be beneficial in applications with lower pressures as well.

The invention can also be used in the food industry, in particular in the dairy sector or food and beverage, where homogenization is involved.

Another application of the invention is the production of carbon-based nanostructured materials, such as graphene and carbon nanotubes or cellular breakdown of yeasts, algae, or microorganisms for the production of intracellular material.

As it is known, a homogenizing compression head or block comprises a high-pressure pump and a homogenizing valve assembly that act on the fluid products containing particles in order to:
- crush the particles to make their dimensions uniform, reducing the average size and the variance of the distribution in order to stabilize the product and to increase its *shelf-life* in the case of emulsions;
- break the cell membranes in order to facilitate the extraction of the active ingredients in the case of pharmaceutical applications;
- modify the structure of the particles in the case of chemical applications and cellulose.

In accordance with a known solution, the homogenizing valve, placed downstream of the piston pump, comprises a first chamber receiving the fluid at high pressure from the pump delivery and a second chamber capable of supplying outgoing homogenized fluid at low pressure. The homogenizing action is obtained by forcing the fluid to pass through an interspace or gap with reduced dimensions afforded between the first and the second chamber.

The focus here is on the homogenizing or pumping valve assembly, which comprises at least:
- a valve, typically a ball check valve, which is a spherical ball, and
- a valve seat designed for allowing the ball check valve to seat leak-tight.

The valve seat may have different shapes, i.e., a planar, conical, or cylindrical hollow body with a rounded inner edge for receiving the ball check valve.

A spring is usually provided for promoting a quick closure of the valve, that means the valve is forced to rest on the valve seat avoiding or reducing leakages.

In addition, an O-ring is provided between the valve seat and a case for the valve seat. As it is known, an O-ring is a toric gasket mainly used for preventing leakages.

In fact, in high pressure applications, it is of primary importance preventing fluid leakages out of the processing zones, which may cause fluid and/or environmental contamination, chemical or biological risks, electrical short circuits, malfunction or blockage of high-pressure pump / homogenizer, risks of fire or even risk of explosion.

In the state of the art, O-rings are designed to be seated in a groove and compressed during assembly between two or more parts, thus forming a seal at the interface.

The known gaskets are made of plastic materials, or elastomeric composites or a combination of plastic and elastomeric materials, so as to be easily fitted in a groove.

Among the plastic materials, the most used are PEEK, PTFE, PVC, PVDF, polyethylene, polyamide, nylon, polyurethane.

Among the elastomeric composites, the most used are EPDM, FKM, FFKM, NBR.

A main disadvantage of the known gaskets lies in the reduced useful lifetime due to one or more of the following conditions:
- very high pressures, i.e., 2000 bar and more;
- pulsing pressures;
- high temperatures, for example higher than the melting point of the gasket materials;
- low temperatures, for example lower than 0°C;
- cavitation phenomena;
- exposure to fibrous fluids which are more abrasive on the surfaces;
- aggressive chemical products.

Occurrence of one or more of these conditions, even if for short periods, may produce deformation, melting, rupture, and even definitive damages. The gaskets wear out more rapidly and must be replaced with greater frequency, with dead times for the production plants.

In order to increase the lifetime of a plastic / elastomeric gasket, another solution is coupling it to a metal or plastic ring (i.e., made of stainless steel, or PEEK or PFTE, etc.) which acts as protecting and anti-extruding barrier for the gasket.

Issues with plastic or elastomeric gaskets of the known type are also experienced in the relief valve assembly of the compression head.

The relief valve assembly serves as safety valve for partly discharging the fluid in response to a working pressure higher than a pre-established threshold. Thus, the relief valve assembly allows to reduce the working pressure.

Similar to the pumping valve assembly, also a known relief valve assembly comprises:
- a valve, typically a ball check valve, which is a spherical ball, and
- a valve seat, for example a hollow plate or hollow cylinder, designed for allowing the ball check valve to seat leak-tight.

A spring is usually provided for maintaining closed the ball check valve, that means the valve is forced to rest on the valve seat in normal conditions.

The spring is preloaded, and the preload may be adjusted according to known means.

An elastic or elastomeric gasket (for example an O-ring) and an anti-extrusion ring are provided between the valve seat and an offtake pipe. These gaskets raised issues similar to the ones already listed for the pumping valve assembly.

In this context, the object of the present invention is to provide a compression head for a homogenizing apparatus, which overcomes the problems of the prior art cited above.

In particular, the object of the present invention is to provide a compression head for a homogenizing apparatus, wherein the maintenance operations, in particular due to substitution of worn gaskets, are reduced so that dead times for the apparatus may also be reduced. Another object of the present invention is to provide a compression head for a homogenizing apparatus, wherein the gaskets / sealings have an increased lifetime over the prior art solutions.

Another object of the present invention is to provide a compression head for a homogenizing apparatus, which can better withstand critical factors such as high pressures, pulsing pressures, high/low temperatures, cavitation phenomena, exposure to fibrous fluids or aggressive chemical products, in particular with respect to known solutions.

Another object of the present invention is to propose a compression head for a homogenizing apparatus, with a valve assembly which is easier and quicker to replace.

The stated technical task and specified aims are substantially achieved by a compression head for a homogenizing apparatus, the compression head comprising:
- at least two interconnected solid units defining at least one interface;
- a valve assembly arranged in a groove which is obtained at said interface and which is delimited by surfaces of said solid units, the valve assembly comprising a ball check valve or a poppet and a valve seat configured to receive the ball check valve or poppet.

The valve seat consists of a hollow body with a rotational symmetry which is fitted in the groove.

The hollow body is made of a metal or a metal alloy or a ceramic material. According to one aspect of the invention, the hollow body comprises:
- a core having a cylindrical shape;
- a first end portion and a second end portion respectively originating on opposite sides of the core.

The first end portion is configured to receive the ball check valve (or poppet).

The groove comprises a central volume having a cylindrical shape configured to receive the core, a first volume configured to receive the first end portion and a second volume configured to receive the second end portion.

Advantageously, the hollow body acts also as a gasket.

According to one embodiment of the invention, the hollow body is made of a single piece.

For example, the hollow body is made of one of the following materials: AISI 316, AISI 316L, AISI 304, AISI 630, SAF 2205, SAF 2507, Tungsten Carbide, Silicon Nitride, Silicon Carbide, Zirconia, Industrial Diamond, Allumina, Bronze, Nitronic.

According to another embodiment of the invention, the hollow body comprises an inner part and an outer part which are coaxially arranged.

In particular, the inner part is made of a harder material than the outer part.

According to one embodiment, the valve assembly is a pumping valve assembly and further comprises a spring arranged on an opposite side of the valve seat with respect to the ball check valve (or poppet).

In this embodiment, the hollow body is a double tapered hollow body with both the first end portion and the second end portion having a frusto-conical shape. The first volume of the groove has a frusto-conical shape configured to receive the first end portion and the second volume of the groove has a frusto-conical shape configured to receive the second end portion.

Preferably, in this embodiment the first end portion and the second end portion are identical.

Preferably, both the first end portion and the second end portion have surfaces with a conicity value which is lower than a conicity value of surfaces delimiting the first volume and the second volume.

Preferably, both the first end portion and the second end portion have surfaces with a conicity value comprised between 10° and 80°, whereas the first volume and the second volume are delimited by surfaces having a conicity value comprised between 10° and 80°.

Preferably, the first end portion has an inner chamfered edge surrounding a longitudinal through hole passing through the hollow body so as to allow the rest of the ball check valve or poppet.

According to another embodiment, the valve assembly is a relief valve assembly.

In this embodiment, the first end portion has a cylindrical shape, and the second end portion is a combination of a cylinder part originating from the core and a frusto-conical part originating from the cylinder part.

In particular, the first end portion has a top recess for receiving the ball check valve or poppet.

Further characteristics and advantages of the present invention will more fully emerge from the non-limiting description of a preferred but not exclusive embodiment of a compression head for a homogenizing apparatus, as illustrated in the accompanying drawings in which:

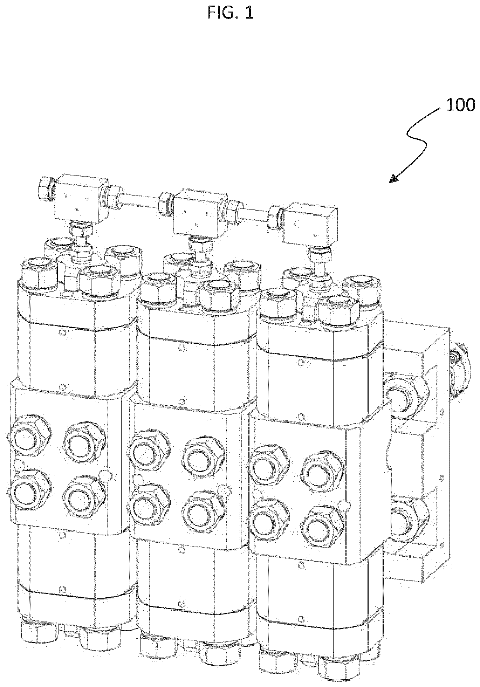

- figure 1 illustrates a compression head for a homogenizing apparatus, in a perspective view, according to the present invention;

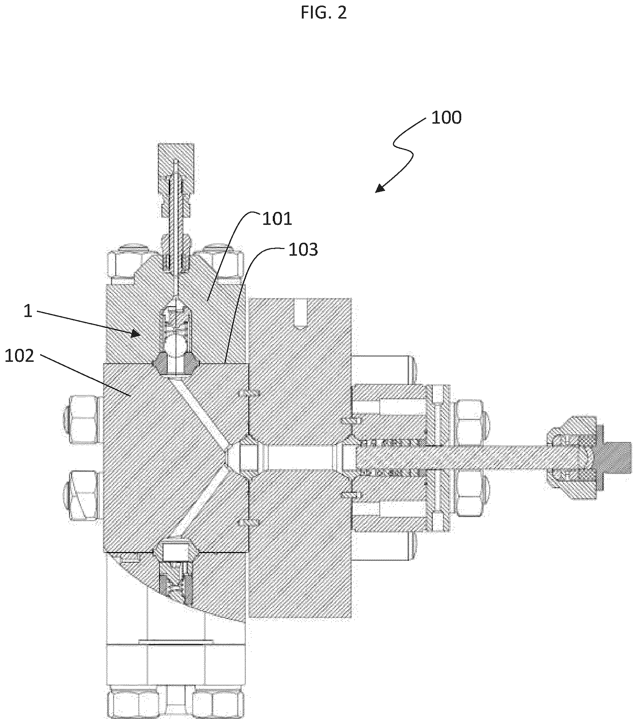

- figure 2 illustrates the compression head of figure 1, in a cross-sectional view;

- figure 3 illustrates a part (pumping valve assembly) of the compression head of figure 2, in cross-sectional view, according to one embodiment;
- figure 4 illustrates the valve seat of the pumping valve assembly of figure 3, in a perspective view;
- figure 5 is a perspective cross-sectional view of the pumping valve assembly of figure 3;
- figure 6 illustrates another embodiment of the pumping valve assembly of figure 5, in a perspective cross-sectional view;
- figure 7 illustrates another part (relief valve assembly) of the compression head of figure 1, in a cross-sectional view;
- figure 8 illustrates the relief valve assembly of figure 7, in a perspective cross-sectional view;
- figure 9 illustrates another embodiment of the relief valve assembly of figure 7, in a cross-sectional view;
- figure 10 illustrates the relief valve assembly of figure 9, in a perspective cross-sectional view.

With reference to the figures, number 100 indicates a compression head or compression block for a homogenizing apparatus.

The compression head 100 comprises at least two interconnected solid units 101, 102 defining at least one interface 103.

In this context, the interface 103 is defined by contacting surfaces of the two solid units 101, 102.

At the interface 103 it is obtained a groove 104 partially housing a valve assembly 1. The groove 104 is delimited by surfaces 105, 106 of the solid units 101, 102.

Preferably, the two solid units 101, 102 are fixedly coupled, for example by screwing or similar means.

The groove 104 is in communication with an elongated bore which also houses part of the valve assembly 1. In the embodiments described and illustrated herewith, the elongated bore is obtained within one of the solid units, in particular the one numbered as 101.

The valve assembly 1 comprises a ball check valve (or a poppet) 2 and a valve seat 3 configured to receive the ball check valve (or poppet) 2.

In this context, reference will be made to the ball check valve for the sake of simplicity.

The valve seat 3 consists of a hollow body 4 with a rotational symmetry. The valve seat 3 is fitted in the groove 104.

The ball check valve 2 is arranged on the valve seat 3, mainly protruding in the longitudinal bore.

The hollow body 4 comprises:
- a core 41 having a cylindrical shape;
- a first end portion 42 and a second end portion 43 respectively originating on opposite sides of the core 41.

Advantageously, the hollow body 4 acts both as a valve seat and as a gasket.

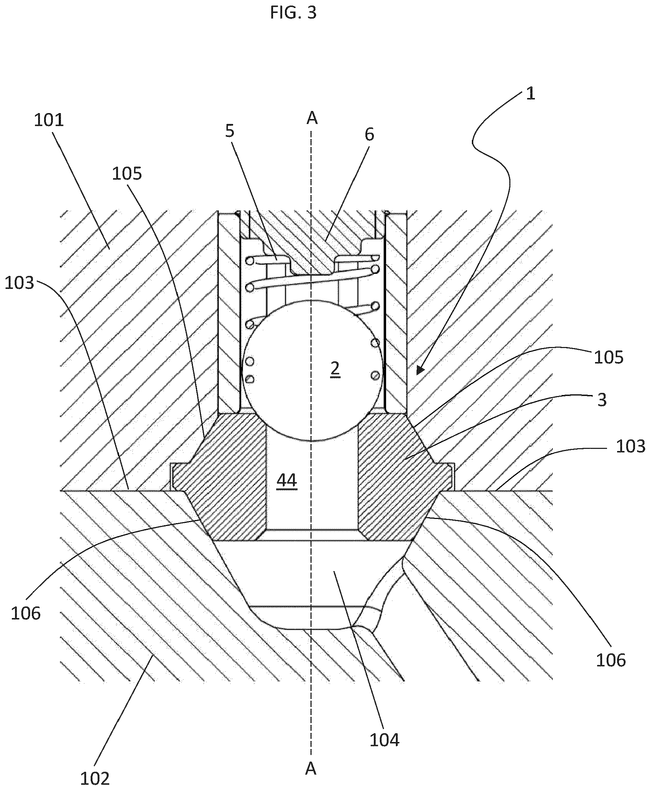

According to embodiments of the invention, illustrated in figures 3 to 5 and 7-8, the hollow body 4 is made of a single piece. Thus, the core 41, the first end portion 42 and the second end portion 43 belong to the same single piece.

Advantageously, the hollow body 4 is made of a metal or a metal alloy or a ceramic material.

For example, the hollow body 4 is made of AISI 316L.

Alternatively, the hollow body 4 is made of one of the following materials: AISI 316, AISI 304, AISI 630, SAF 2205, SAF 2507, Tungsten Carbide, Silicon Nitride, Silicon Carbide, Zirconia, Industrial Diamond, Allumina, Bronze, Nitronic.

The hollow body 4 has a longitudinal through hole 44 which passes through the whole body from the first end portion 42, to the core 41, to the second portion 43.

In particular, the longitudinal through hole 44 is obtained centrally in the hollow body 4. The axis of symmetry A-A of the hollow body 4 coincides with the axis of the longitudinal through hole 44.

The first end portion 42 of the hollow body 4 is configured to receive the ball check valve 2.

The solid units 101, 102 may be made of one of the following materials: SAF 2507, SAF 2205, AISI 316, AISI 316L.

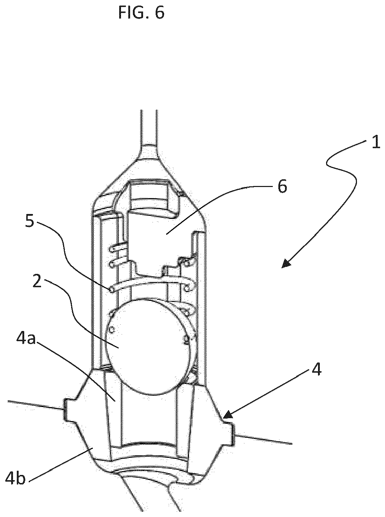

According to other embodiments of the invention, illustrated in figures 6 and 9-10, the hollow body 4 is made of two parts 4a, 4b.

In particular, the hollow body 4 comprises an inner part 4a and an outer part 4b, which will be better described later.

In particular, the inner part 4a and the outer part 4b are coaxially arranged. Preferably, the inner part 4a is made of a harder material than the outer part 4b.

The groove 104 is shaped so as to receive the hollow body 4.

In particular, the groove 104 comprises a central volume having a cylindrical shape configured to receive the core 41, a first volume configured to receive the first end portion 42 and a second volume configured to receive the second end portion 43.

The cylindrical core 41 allows to separate the sealing action of the first end portion 42 and of the second end portion 43. In addition, the cylindrical core 41 serves for centering the hollow body 4 in the groove 104.

The cylindrical core 41 is also beneficial for avoiding deformation or extrusion of the two end portions 42, 43 once the two solid units 101, 102 are fixedly coupled, for example by screwing.

As a matter of fact, in case of absence of the cylindrical core 41, there would originate an empty space between the common base of the two end portions 42, 43 and the central volume of the groove 104.

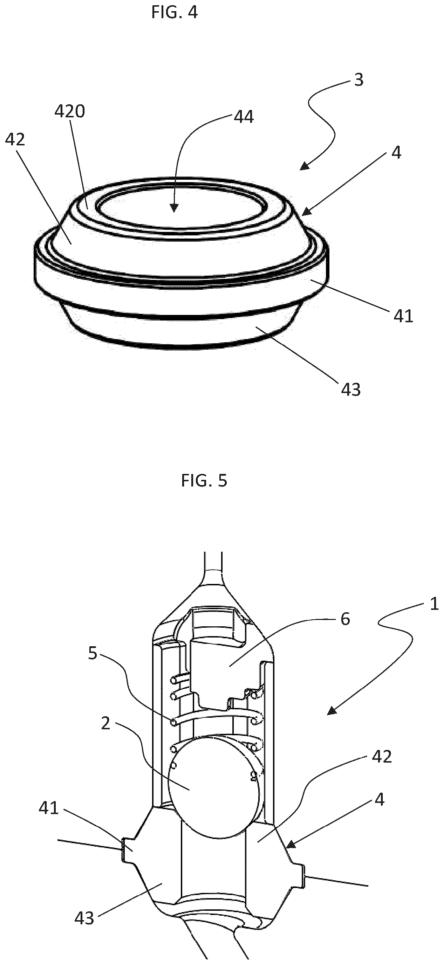

According to one embodiment of the invention, illustrated in figure 3, the valve assembly 1 is a pumping valve assembly. In particular, the pumping valve assembly 1 can be either a delivery valve or a suction valve. Preferably, the first end portion 42 has an inner chamfered edge 420 which surrounds the longitudinal through hole 44 passing through the hollow body 4 so as to allow the rest of the ball check valve 2. This is visible in figure 4.

The pumping valve assembly 1 further comprises a spring 5 arranged in the longitudinal bore, on the opposite side of the valve seat 3 with respect to the ball check valve 2.

In particular, the ball check valve 2 is interposed between the valve seat 3 and the spring 5.

As usual, the spring 5 is provided for promoting a quick closure of the ball check valve 2, that means the ball check valve 2 is forced to rest on the valve seat 3 avoiding or reducing leakages.

The spring 5 is interposed between the ball check valve 2 and a valve cover 6 arranged in the longitudinal bore and acting as a limit.

In the pumping valve assembly 1, the hollow body 4 is a double tapered hollow body with both the first end portion 42 and the second end portion 43 having a frusto-conical shape.

Accordingly, the first volume of the groove 104 has a frusto-conical shape configured to receive the first end portion 42 and the second volume of the groove 104 has a frusto-conical shape configured to receive the second end portion 43.

Preferably, the longitudinal through hole 44 which passes through the hollow body 4 has a constant diameter, which may increase at the two ends.

Preferably, the first end portion 42 and the second end portion 43 are identical. In particular, the first end portion 42 and the second end portion 43 have the same shape and dimensions.

Accordingly, the first volume and the second volume of the groove 104 are also identical.

Having identical end portions 42, 43 allows to obtain a valve seat 3 that is reversible. This allows to avoid mistakes during the assembly procedure, the assembly direction being not important.

In order to be completely reversible, the second end portion 43 also has an inner chamfered edge which surrounds the longitudinal through hole 44 passing through the hollow body 4 so as to allow the rest of the ball check valve 2.

According to one aspect of the invention, both the first end portion 42 and the second end portion 43 have surfaces with a conicity value which is lower than a conicity value of the surfaces 105, 106 delimiting the first volume and the second volume.

In particular, both the first end portion 42 and the second end portion 43 have surfaces with a conicity value comprised between 10° and 80°.

The surfaces 105, 106 delimiting the first volume and the second volume of the groove 104 have a conicity value comprised between 10° and 80°.

Thanks to this choice of conicity ranges and to the fact that the two end portions 42, 43 have surfaces with a lower conicity value than the surfaces 105, 106, the hollow body 4 is forced within the groove 104 to provide a sealing action upon coupling and tightening the solid units 101, 102.

The forcing effect established between the hollow body 4 and the surfaces 104, 105 allows to retain the processed fluid under pulsating delta conditions, which typically occur in positive displacements pumps or homogenizers.

According to the embodiment of figures 3 to 5, the hollow body 4 is made of a single piece.

For example, the hollow body 4 is made of AISI 316L.

Alternatively, the hollow body 4 is made of one of the following materials: AISI 316, AISI 304, AISI 630, SAF 2205, SAF 2507, Tungsten Carbide, Silicon Nitride, Silicon Carbide, Zirconia, Allumina, Bronze, Industrial Diamond, Nitronic.

According to an alternative embodiment of the pumping valve assembly 1, shown in figure 6, the hollow body 4 comprises an inner part 4a and an outer part 4b which are coaxially arranged.

In particular, the inner part 4a is made of a material having higher surface hardness characteristics, such as advanced ceramics or sintered hard metals, than the material used for the outer part 4b.

For example, the inner part 4a is made of one of the following materials: Tungsten Carbide, Silicon Nitride, Silicon Carbide, Zirconia, Allumina, Industrial Diamond.

The outer part 4b is made of a more ductile material, such as for example AISI 304, AISI 316, AISI 316L, AISI 630, SAF 2205, SAF 2507, Nitronic, Bronze.

Preferably, the inner part 4a and the outer part 4b of the hollow body 4 are pre-coupled by shrink fitting, or by conical coupling or other convenient methods.

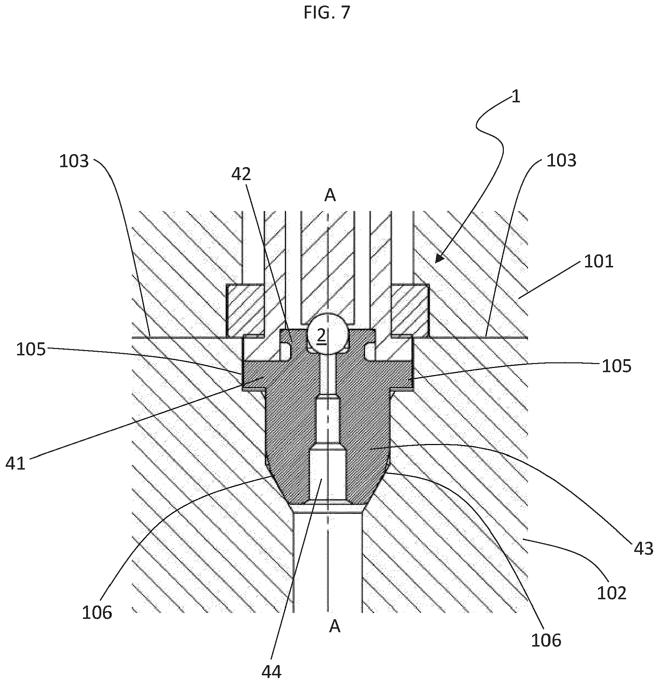

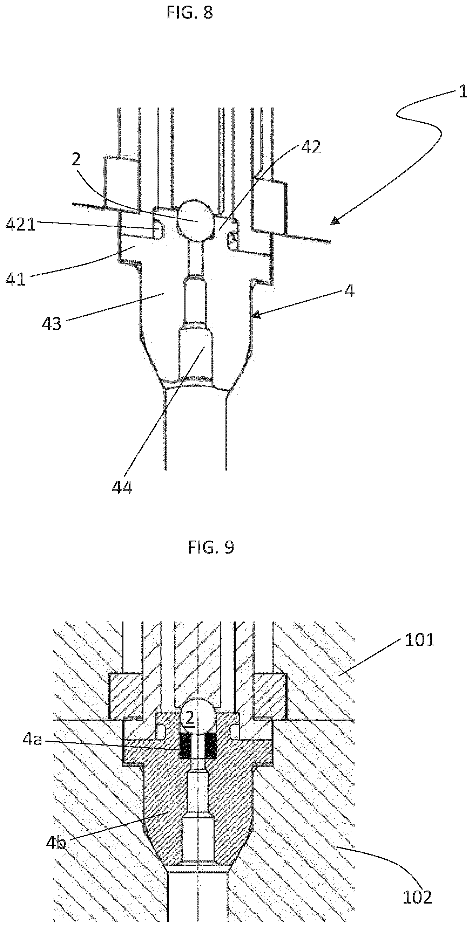

According to another embodiment of the invention, illustrated in figures 7 and 8, the valve assembly 1 is a relief valve assembly.

In this embodiment, the first end portion 42 of the hollow body 4 is substantially cylindrical, optionally with an annular recess.

The second end portion 43 combines a cylinder part originating from the core 41 and a frusto-conical part originating from the cylinder part.

Accordingly, the first volume of the groove 104 has a cylindrical shape configured to receive the first end portion 42 and the second volume of the groove 104 comprises a combined volume of a cylinder and a frusto-conical volume configured to receive the second end portion 43. Preferably, the longitudinal through hole 44 which passes through the hollow body 4 has a variable diameter.

Preferably, the first end portion 42 has a top recess which communicates with the longitudinal through hole 44. The top recess is configured to receive the ball check valve 2.

According to the embodiment of figures 7 and 8, the hollow body 4 is made of a single piece.

For example, the hollow body 4 is made of AISI 316L.

Alternatively, the hollow body 4 is made of one of the following materials: AISI 304, AISI 630, SAF 2205, SAF 2507, Tungsten Carbide, Silicon Nitride, Silicon Carbide, Zirconia, Allumina, Bronze, Nitronic, Industrial Diamond.

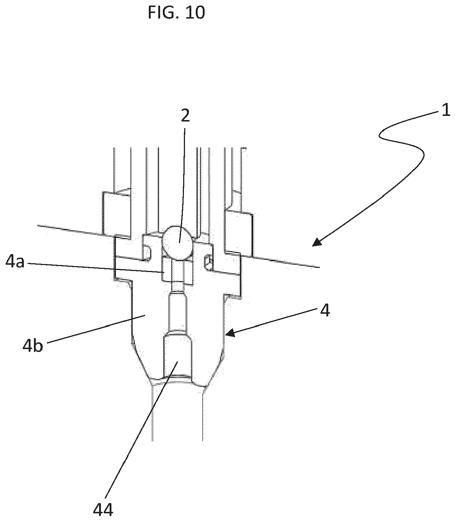

According to an alternative embodiment of the relief valve assembly 1, shown in figures 9 and 10, the hollow body 4 comprises an inner part 4a and an outer part 4b which are coaxially arranged.

In particular, the inner part 4a is made of a material having higher surface hardness characteristics than the material used for the outer part 4b.

For example, the inner part 4 is made of one of the following materials: hardened stainless steel AISI 630 or advanced ceramics / sintered hard metals such as Tungsten Carbide, Silicon Nitride, Silicon Carbide, Zirconia, Allumina, Industrial Diamond.

The outer part 4b is made of a more ductile material, such as for example AISI 304, AISI 316, AISI 316L, SAF 2205, SAF 2507, Nitronic, Bronze. Preferably, the inner part 4a and the outer part 4b of the hollow body 4 are pre-coupled by shrink fitting, or by conical coupling or other convenient methods.

The characteristics of a compression head for a homogenizing apparatus, according to the present invention, are clear, as are the advantages.

In particular, the proposed solution provides a valve seat which acts also as a gasket, which may be used in a pumping valve assembly or in a relief valve assembly of a compression head.

This reduces the number of components in the valve assembly, with benefits in terms of reduced maintenance and replacement operations.

As a matter of fact, there is no more need for a case for the valve seat, with relative O-ring and anti-extrusion ring.

As already explained, the specific design of the valve seat, which comprises a cylindrical core, serves for simplifying and speeding up the assembly.

The proposed valve seat is made of a metal or a metal alloy or a ceramic material. This allows to avoid the use of plastic or elastomeric gaskets, thus overcoming the issues of the state of the art.

In particular, the proposed valve seat has an increased lifetime over the prior art solutions.

In addition, the materials employed for the valve seat allows to better withstand high pressures, pulsing pressures, high/low temperatures, cavitation phenomena, exposure to fibrous fluids or to aggressive chemical products.

In particular, when the valve seat is made of a material with good elastic properties (such as AISI 316L), the same valve seat may be quickly and easily extracted from the groove without any issues of deformation.

## Claims

1. A compression head (100) for a homogenizing apparatus, the compression head (100) comprising:
- at least two interconnected solid units (101, 102) defining at least one interface (103);
- a valve assembly (1) arranged in a groove (104) which is obtained at said interface (103) and which is delimited by surfaces (105, 106) of said solid units (101, 102), the valve assembly (1) comprising a ball check valve or a poppet (2) and a valve seat (3) configured to receive the ball check valve or poppet (2),
**characterized in that** said valve seat (3) consists of a hollow body (4) with a rotational symmetry which is fitted in said groove (104), the hollow body (4) being made of a metal or a metal alloy or a ceramic material, said hollow body (4) comprising:
- a core (41) having a cylindrical shape;
- a first end portion (42) and a second end portion (43) respectively originating on opposite sides of the core (41), the first end portion (42) being configured to receive the ball check valve or poppet (2).

2. The compression head (100) according to claim 1, wherein the hollow body (4) acts also as a gasket.

3. The compression head (100) according to claim 1 or 2, wherein said groove (104) comprises a central volume having a cylindrical shape configured to receive the core (41), a first volume configured to receive the first end portion (42) and a second volume configured to receive the second end portion (43).

4. The compression head (100) according to claim 3, wherein the hollow body (4) is made of a single piece.

5. The compression head (100) according to claim 3 or 4, wherein said hollow body (4) is made of one of the following materials: AISI 316, AISI 316L, AISI 304, AISI 630, SAF 2205, SAF 2507, Tungsten Carbide, Silicon Nitride, Silicon Carbide, Zirconia, Industrial Diamond, Allumina, Bronze, Nitronic.

6. The compression head (100) according to claim 3, wherein the hollow body (4) comprises an inner part (4a) and an outer part (4b) which are coaxially arranged, wherein the inner part (4a) is made of a harder material than the outer part (4b).

7. The compression head (100) according to any one of claims 3 to 6, wherein said valve assembly (1) is a pumping valve assembly and further comprises a spring (5) arranged on an opposite side of the valve seat (3) with respect to the ball check valve or poppet (2).

8. The compression head (100) according to claim 7, wherein said hollow body (4) is a double tapered hollow body with both the first end portion (42) and the second end portion (43) having a frusto-conical shape, the first volume of said groove (104) having a frusto-conical shape configured to receive the first end portion (42) and the second volume of said groove (104) having a frusto-conical shape configured to receive the second end portion (43).

9. The compression head (100) according to claim 8, wherein the first end portion (42) and the second end portion (43) are identical.

10. The compression head (100) according to claim 9, wherein both the first end portion (42) and the second end portion (43) have surfaces with a conicity value which is lower than a conicity value of surfaces (105, 106) delimiting the first volume and the second volume.

11. The compression head (100) according to claim 10, wherein both the first end portion (42) and the second end portion (43) have surfaces with a conicity value comprised between 10° and 80°, said first volume and said second volume being delimited by surfaces (105, 106) having a conicity value comprised between 10° and 80°.

12. The compression head (100) according to any one of the claims 7 to 11, wherein the first end portion (42) has an inner chamfered edge (420) surrounding a longitudinal through hole (44) passing through the hollow body (4) so as to allow the rest of the ball check valve or poppet (2).

13. The compression head (100) according to any one of claims 3 to 6, wherein said valve assembly (1) is a relief valve assembly.

14. The compression head (100) according to claim 13, wherein the first end portion (42) has a cylindrical shape, and the second end portion (43) is a combination of a cylinder part originating from the core (41) and a frusto-conical part originating from the cylinder part.

15. The compression head (100) according to claim 13 or 14, wherein the first end portion (42) has a top recess for receiving the ball check valve or poppet (2).
